# EUROPÄISCHE PATENTSCHRIFT

(11) **EP 0 438 383 B1**
(45) Veröffentlichungstag und Bekanntmachung des Hinweises auf die Patenterteilung: **26.05.1993**
(21) Anmeldenummer: 91810018.1
(22) Anmeldetag: 11.01.1991
(51) Int. Cl.: E04C 5/12, E02B 9/06

(54) **Vorgespannte Betonauskleidung in einem Druckstollen**
Prestressed lining concrete in a pressure gallery
Revêtement en béton précontraint dans une galerie en pression

(30) Priorität: 19.01.1990 CH 178/90
(43) Veröffentlichungstag der Anmeldung: 24.07.1991
(73) Patentinhaber: VSL International AG, CH-3008 Bern (CH)
(72) Erfinder: Siegfried, Erwin, CH-3097 Liebefeld (CH); Marti, Peter, CH-3123 Belp (CH)
(74) Vertreter: Tschudi, Lorenz

(56) Entgegenhaltungen:
- CH-A- 304 650
- FR-A- 1 458 056
- FR-A- 2 371 562
- GB-A- 1 507 977
- US-A- 3 824 751
- US-A- 3 869 530
- US-A- 4 045 929

## Beschreibung

Die vorliegende Erfindung bezieht sich auf eine vorgespannte Betonauskleidung in einem Druckstollen gemäss dem Oberbegriff des Patentanspruches 1.

Im Gebirge können Druckstollen meistens nicht auf ihrer ganzen Länge mit einer einheitlichen Auskleidung versehen werden, da die letztere der jeweiligen Gebirgsbeschaffenheit angepasst werden muss. Die heute bekannten üblichen Bauweisen zum Erstellen von Auskleidungen sind:
- Auskleidung aus Spritzbeton
- unbewehrte Betonauskleidung
- bewehrte Betonauskleidung
- Stahlpanzerung mit Betonhinterfüllung und
- vorgespannte Betonauskleidung

In welchen Teilbereichen eines im Gebirge zu erstellenden Druckstollens welche Auskleidung zu wählen ist, zeigt üblicherweise eine im voraus durchgeführte Untersuchung. Die Auskleidung von Druckstollen stellt eine Schale dar, die im Gebirgsmaterial (Fels) eingebettet ist. Bei allen diesen Druckstollen ist das Gebirgsmaterial als umhüllendes Widerlager gleichzeitig ein Bestandteil der Gesamtkonstruktion. Die statischen Zusammenhänge in diesem Verbundkörper bedingen eine Beurteilung der verschiedenen Belastungseinflüsse. Deshalb muss beispielsweise vor der Ausführung entschieden werden, ob die Gebirgsbeschaffenheit und die Gebirgsüberlagerung ein Mitwirken des Felsens zulässt.

Im weiteren kommt dazu, dass die Frästechnik zum Erstellen des Stollens sowie die Schalungs- und Betoniertechnik sich leistungsmässig derart weiterentwickelt haben, dass die Arbeiten für den Einbau von Stahlpanzerungen mit Betonhinterfüllung oder die Anwendung der vorgespannten Betonauskleidung immer weniger dem Arbeitsfortschritt folgen können. Es ist aber wünschenswert, dass die oben erwähnten Bauweisen zum Erstellen von Auskleidungen an unvorhergesehene und/oder wechselnde Gebirgsverhältnisse rasch angepasst werden können. Zum Erstellen von zusätzlichen Stahlpanzerungen ist es wegen den üblichen Lieferfristen kaum möglich, diesem Bedürfnis nachzukommen. Bei der vorgespannten Betonauskleidung steht der Anpassungsfähigkeit jedoch grundsätzlich nichts im Wege.

Bei beiden Verfahren zeigt sich im weiteren, dass sie dem schnellen Baufortschritt des Stollenausbruches und des Betonierens hinderlich sind. Die Stahlpanzerung muss als unförmiger Gegenstand in den Stollen eingefahren und an Ort und Stelle zusammengeschweisst werden. Auch eine vorgespannte Betonauskleidung nach dem heutigen Stand der Technik, beispielweise wie in CH-A-304 650 beschrieben, verursacht je nach den gestellten Anforderungen ähnliche Probleme. Oftmals sind über den Umfang des Stollens verteilte Nischen zum Aufnehmen der Spannkörper zu erstellen und an Ort jeweils mit Zusatzarmierungen zu versehen. Diese Arbeiten stören dabei beträchtlich ein zügiges Voranschreiten des Baufortschrittes.

Es ist deshalb die Aufgabe der vorliegenden Erfindung, eine Möglichkeit aufzuzeigen, wie das Erstellen eines Druckstollens mit vorgespannter Betonauskleidung gegenüber dem oben skizzierten Stand der Technik vereinfacht werden kann. Es ist im weiteren das Ziel der Erfindung, möglichst alle Arbeiten, die ausserhalb eines Druckstollens erledigt werden können, ausserhalb des Stollens auszuführen. Die Bauzeit soll verkürzt und der Baufortschritt beschleunigt werden.

Erfindungsgemäss wird diese Aufgabe durch die im kennzeichnenden Teil des Patentanspruches 1 aufgeführten Merkmale gelöst.

Bevorzugte Ausführungsformen der Betonauskleidung sind in den abhängigen Patentansprüchen offenbart.

Die erfindungsgemässe vorgespannte Betonauskleidung weist die folgenden vorteilhaften Merkmale auf:
- Die Verankerungskörper sind zugleich als Elemente des Sohlenteiles während dem Bau des Druckstollens zum Tragen und Befahren mit Baumaschinen sowie mit Materialtransportvorrichtungen einsetzbar und können im weiteren wegen ihrer U-Förmigkeit zur Entwässerung des Druckstollens während seiner Erstellung benutzt werden.
- Die Verankerungskörper können, wo dies erforderlich sein sollte, zusätzlich über den Umfang des Druckstollens verteilt, beispielsweise unten und oben, angeordnet werden. Dadurch entfallen die vorgenannten Nischen sowie das nachträgliche Zubetonieren derselben.
- Die Verlegearbeiten für die Spannglieder und die Spannanker werden vereinfacht.
- Die Spannglieder sind besser gegen Korrosion geschützt.
- Die Verankerungskörper können ausserhalb des Druckstollens hergestellt werden. Die gegenseitige Behinderung durch verschiedene Arbeitsgänge im Innern des Druckstollens wird vermindert.

Die Erfindung ist nachstehend anhand von Figuren beispielsweise näher beschrieben. Es zeigen
- Fig. 1: eine erste Ausführung eines Verankerungskörpers in perspektivischer Darstellung,
- Fig. 2: einen Querschnitt durch den in der Fig. 1 dargestellten Verankerungskörper,
- Fig. 3: einen Querschnitt durch eine zweite Ausführung eines Verankerungskörpers,
- Fig. 4: eine dritte Ausführung eines Verankerungskörpers in perspektivischer Darstellung,
- Fig. 5: eine vierte Ausführung eines Verankerungskörpers,
- Fig. 6: einen Querschnitt durch einen Druckstollen mit darin angeordneten Verankerungskörpern und Spanngliedern,
- Fig. 7: einen vergrösserten Ausschnitt des Druckstollenquerschnittes gemäss der Fig. 6 mit zusätzlich gezeigten, aneinandergereihten Verankerungskörpern,
- Fig. 8: eine Detaildarstellung zum Illustrieren der Längsvorspannung von aneinandergereihten Verankerungskörpern und
- Fig. 9: ein Beispiel der Verankerungskörper- und Spanngliedanordnung zum Vorspannen einer ebenen Platte.

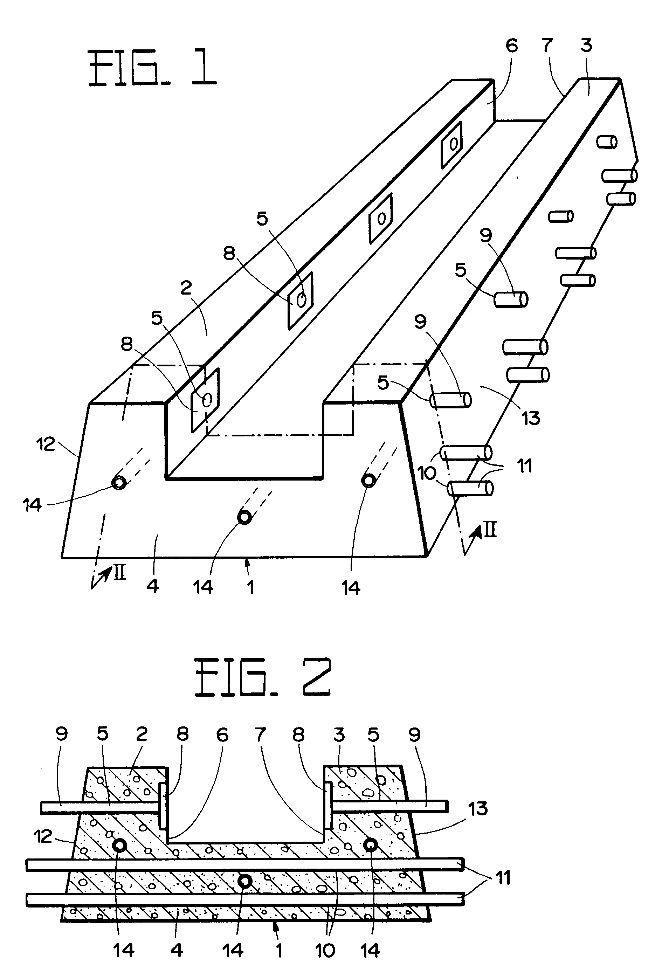

Die Fig. 1 bis 4 zeigen Verankerungskörper, die vorzugsweise bei der Herstellung von Druckstollen verwendet werden. Sie können aber auch bei der Herstellung von gewölbten Wänden, beispielsweise von Behältern, eingesetzt werden. In den Fig. 1 und 2 ist mit 1 eine erste Ausführungsform eines der Verankerungskörper gezeigt. Er besteht aus einem länglichen Körper, der aus armiertem Beton hergestellt worden ist. Im Querschnitt ist der Körper im wesentlichen U-förmig, weist zwei gleichsinnig gerichtete, voneinander beabstandete Schenkel 2, 3 auf, welche an ihrer Basis durch einen Basisschenkel 4 miteinander verbunden sind. Jeder der Schenkel 2, 3 ist so ausgebildet, dass in ihm mehrere in seiner Querrichtung verlaufende erste Durchführungsöffnungen 5 zum Durchführen von je einem Spannglied vorhanden sind. Die ersten Durchführungsöffnungen 5 sind in Bezug auf die Längsrichtung der beiden Schenkel 2, 3 in mehr oder weniger regelmässigen Abständen voneinander angeordnet. Die einander zugewandten Innenflächen 6, 7 der beiden Schenkel 2, 3, welche Innenflächen in diesem Beispiel etwa parallel zueinander verlaufen, weisen im Bereich von jeder der ersten Durchführungsöffnungen 5 je eine in diesem Beispiel einbetonierte Ankerplatte 8 auf. Die Ankerplatte ist dazu vorgesehen, dass zum Vorspannen des durch die erste Durchführungsöffnung 5 geführten Spanngliedes an ihr eine Ankerbüchse angelegt werden kann. Die Ankerplatten sind, wie dies in der Fig. 2, die einen Querschnitt durch den Verankerungskörper der Fig. 1 darstellt, gezeigt ist, mit je einem ersten Durchgangsrohr 9 verbunden. Da sowohl die Ankerplatte 8 als auch das Durchgangsrohr 9 je aus einem stählernen Material hergestellt sind, ist die genannte Verbindung vorzugsweise eine Schweissverbindung. Im Bereiche der Basen der beiden Schenkel 2, 3 sind in Querrichtung zum Verankerungskörper 1 verlaufende zweite Durchführungsöffnungen 10 vorhanden, die mit zweiten, vorzugsweise stählernen Durchgangsrohren 11 ausgekleidet sind. Längs des Verankerungskörpers sind ebenfalls mehrere zweite Durchführungsöffnungen 10 in mehr oder weniger regelmässigen Abständen angeordnet. Diese zweiten Durchführungsöffnungen 10 sind ebenfalls zum Durchführen von Spanngliedern bestimmt, wie dies noch weiter hinten gezeigt werden wird. Auf den nach aussen ragenden Flächen 12, 13 der beiden Schenkel 2, 3 stehen die ersten und zweiten Durchgangsrohre 9, 11 vorteilhafterweise zum Bilden eines Armierungsstosses mit einer an den Verankerungskörper anstossenden Armierung vor. Die Ankerplatte 8 mit dem angeschweissten ersten Durchgangsrohr 9 bildet zusammen einen Teil einer Spannverankerung. Die Durchgangsrohre 9 und 11 sind im Verankerungskörper 1 zugleich zum teilweisen Armieren bestimmt. Mit 14 sind in Längsrichtung verlaufende Oeffnungen, in denen auch Rohre angeordnet sind, gezeigt. Diese dienen ebenfalls zum teilweisen Armieren des Verankerungskörpers sowie zum Durchführen von Spannstangen oder Spanngliedern, zur Längsvorspannung von mehreren hintereinander angeordneten Verankerungskörpern. Zusätzliche Armierungen sind in den Figuren nicht dargestellt.

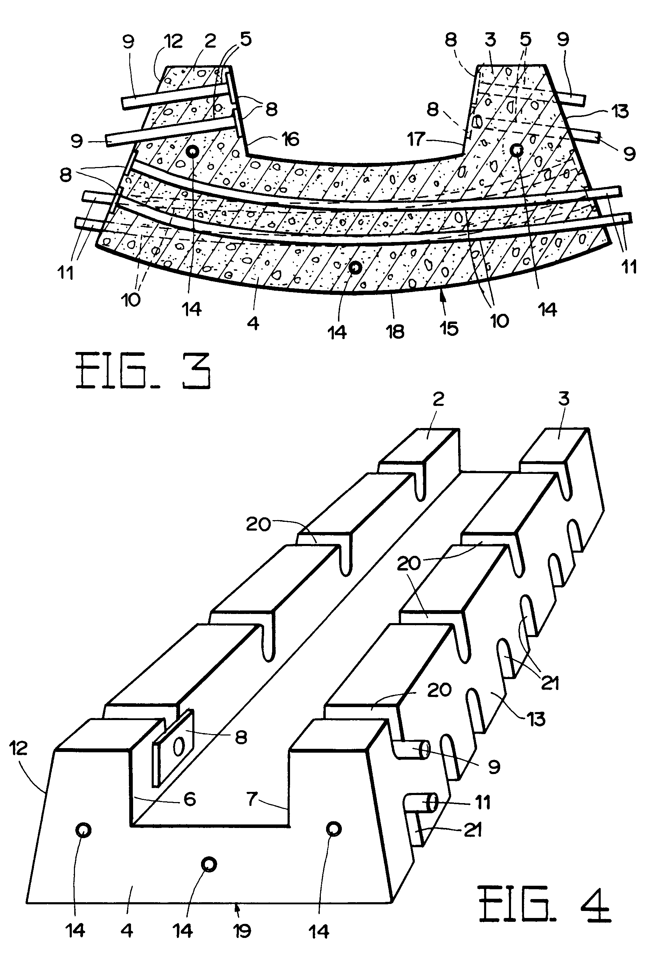

In der Fig. 3 ist der Querschnitt einer zweiten Ausführung eines Verankerungskörpers 15 dargestellt. Die Bezugszeichen von identischen Teilen, oder Teilen mit gleicher Funktion zu bereits in den Fig. 1 und 2 beschriebenen Teilen, sind beibehalten worden. Diese zweite Ausführungsform von einem Verankerungskörper 15 ist für die Herstellung von Druckstollen besonders geeignet. Zum einen fällt auf, dass die Aussenfläche 18 des Basisschenkels 4 gerundet ist und zwar vorzugsweise mit einem Radius, der demjenigen vom zu erstellenden Druckstollen etwa entspricht. Die Innenflächen 16, 17 der beiden Schenkel 2, 3 sind V-förmig zueinander geneigt. Ueber die Höhe von jedem der Schenkel 2, 3 verteilt, sind in diesem Ausführungsbeispiel je zwei übereinanderliegende Ankerplatten 8 und erste Durchgangsrohre 9 angeordnet. Durch die Neigung der Innenflächen 16, 17 der beiden Schenkel 2, 3 kann die Austrittsrichtung der ersten Durchgangsrohre 9 aus dem Verankerungskörper 15 bestimmt werden. Diese wird vorzugsweise so gewählt, wie dies weiter hinten noch ausführlicher dargestellt ist, dass die rund um den Druckstollen verlaufenden Spannglieder zur Vermeidung von zusätzlichen Reibungsverlusten möglichst geringen Radiusänderungen unterworfen sind. Dies gilt ebenfalls für die Anordnung der zweiten Durchgangsrohre 11, die in diesem Verankerungskörper ebenfalls so gehalten ist, dass die durchgeführten Spannglieder möglichst fliessend in einen dem Druckstollenradius angepassten Spanngliedradius übergehen. Die zweiten Durchgangsrohre 11 weisen in diesem Ausführungsbeispiel auf der einen Seite ebenfalls eine Ankerplatte 8 auf. Diese ist zum Anlegen einer Verankerungsbüchse zum Bilden einer festen Verankerung der später durchgeführten Spannglieder bestimmt.

Die Fig. 4 zeigt eine dritte Ausführungsform eines Verankerungskörpers 19. Er weist im wesentlichen die gleiche Form wie derjenige, der in den Fig. 1 und 2 dargestellt ist, auf. Anstelle der Durchführungsöffnungen 9, 10 sind jedoch in diesem Ausführungsbeispiel Einschnitte 20, 21 ausgebildet, die zum Durchführen der Spannglieder bestimmt sind. Jedes der Spannglieder kann ebenfalls durch ein Durchgangsrohr 9, das auf seiner einen Seite mit einer Ankerplatte 8 verschweisst ist, und in einen der Einschnitte 20 eingelegt ist, geführt werden. Das Durchgangsrohr 9 mit der Ankerplatte 8 bildet auch hier einen Teil einer Spannverankerung und kann zur teilweisen Armierung des Verankerungskörpers, insbesondere nach dem Einbetonieren desselben, mitverwendet werden. Wie im ersten Ausführungsbeispiel können zweite Durchgangsrohre 11, die in die unteren Einschnitte 21 eingelegt sind, zum Durchführen von Spanngliedern durch den Basisschenkel 4 verwendet werden. Es wäre ebenfalls denkbar, die gebildeten Einschnitte mit Armierungselementen so zu gestalten, dass die Durchgangsrohre nicht notwendig wären. Mit Vorteil würden diese Armierungselemente auf den Aussenseiten 12, 13 der Schenkel vorstehend ausgebildet sein, um mit der an den Verankerungskörper 19 anschliessenden Armierung den bereits genannten Armierungsstoss zu bilden.

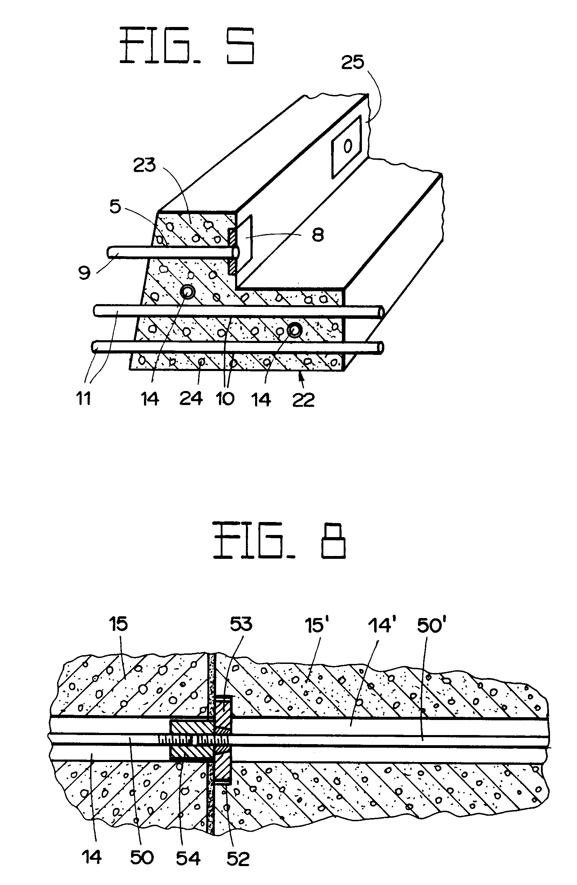

In der Fig. 5 ist eine vierte Ausführungsform eines Verankerungskörpers 22 dargestellt, der in seinem Querschnitt im wesentlichen L-förmig ausgebildet ist. Der eine Schenkel 23 weist eine erste, in seiner Querrichtung verlaufende Durchgangsöffnung 5 zum Durchführen eines Spanngliedes auf. Auch diese Durchgangsöffnung ist analog zu den Fig. 1 und 2 mit einer Ankerplatte 8 und einem ersten Durchgangsrohr 9 ausgelegt. Die Ankerplatte 8 und das Durchgangsrohr 9 sind ebenfalls miteinander verschweisst, in den Verankerungskörper 22 einbetoniert worden, bilden Teile einer Spannverankerung und sind zugleich zur teilweisen Armierung des Verankerungskörpers bestimmt. Im anderen Schenkel 24 sind weitere Durchgangsöffnungen 10 angeordnet, die ungefähr parallel zur Durchgangsöffnung 5 verlaufen. Ebenfalls in diesen Durchgangsöffnungen sind Rohre, nämlich zweite Durchgangsrohre 11 vorhanden. Dieser Verankerungskörper, der vor allem zum Herstellen von Platten, Decken, Trägern und Schalen geeignet ist, entspricht im wesentlichen dem Verankerungskörper 1, der anhand der Fig. 1 und 2 beschrieben worden ist, wobei der Schenkel 3 nicht ausgebildet ist.

Weitere hier nicht beschriebene Ausführungsformen von Verankerungskörpern, beispielsweise auch aus anderen Materialien als armiertem Beton hergestellt, für die verschiedensten Anwendungen in der Vorspanntechnik und die verschiedenartigsten Bauwerke sind möglich. Im folgenden wird vor allem die Verwendung von Verankerungskörpern im Druckstollenbau beschrieben, da dort seine eingangs genannten, vorteilhaften Merkmale besonders stark wirksam sind.

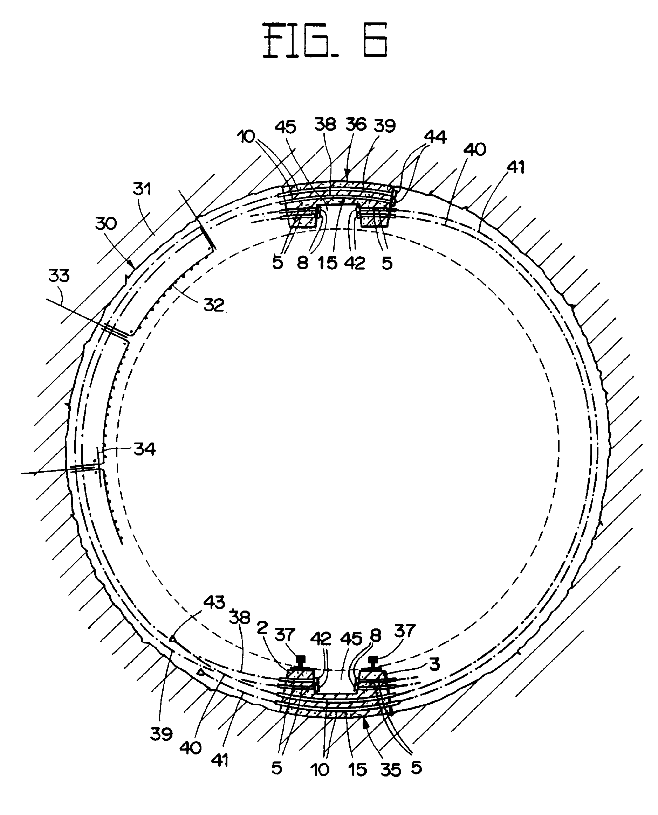

In der Fig. 6 ist ein Querschnitt durch einen Druckstollen 30 vor dem Einbringen des Bodens dargestellt. Mit 31 ist der den Druckstollen umgebende Fels bezeichnet, 32 kennzeichnet Armierungselemente, beispielsweise Armierungskörbe, wie sie zum Armieren von Druckstollen üblicherweise erstellt, über dessen Umfang verteilt, und vorzugsweise mittels Felsdübeln 33 im Fels 31 befestigt werden. Mit 34 ist ein Stab gekennzeichnet, der den Armierungsstoss zwischen zwei einander benachbarten Armierungskörben bildet. Verankerungskörper 15, von denen in der Figur nur die Stirnseite von einem sichtbar ist und die vorgängig oder während dem Felsausbruch beim Erstellen des Druckstollens, vorzugsweise ausserhalb des Stollens vorfabriziert worden sind, werden mit fortschreitendem Felsausbruch im Druckstollen aneinandergereiht, durch Vorspannung miteinander längsverbunden und dienen als Sohlenteil 35. Die beiden Schenkel 2, 3 sind dabei so ausgebildet, dass auf je ihren der Basis abgewandten Flächen Schienen 37, die zum Vorschieben von Baumaschinen längs des Stollens dienen, montiert werden können. Die sich zwischen den Innenflächen der beiden Schenkel befindliche Rille 45 wird während der Bauzeit des Druckstollens als Rigole zum Wasserabfluss verwendet.

In der gezeigten Figur sind weitere Verankerungskörper 15, wovon ebenfalls nur die Stirnseite von einem sichtbar ist, an der dem Sohlenteil gegenüberliegenden Wandung aneinander gereiht befestigt und bilden einen Verankerungsblock 36. Spannglieder 38, 39, von denen längs des Stollens eine Vielzahl vorhanden sind, sind mit ihrem einen Ende durch die ersten Durchführungsöffnungen 5 in den zum Sohlenteil gehörenden Verankerungskörper 15 eingeführt und verlaufen entlang der Druckstollenwandung durch die Armierungskörbe 32 hindurch zum weiteren Verankerungskörper 15, der ein Teil des Verankerungblockes 36 ist sind dort durch seine zweiten Durchführungsöffnungen 10 hindurchgeführt und enden beim Austritt aus dem Verankerungskörper 15 des Verankerungsblockes 36 je in einer festen Verankerung 44. Weitere Spannglieder 40, 41 sind durch den einen Schenkel des Verankerungskörpers 15 des Verankerungsblockes 36 hindurchgeführt, verlaufen entlang der den erstgenannten Spanngliedern gegenüberliegenden Druckstollenwandung, bis zum Verankerungskörper 15 des Sohlenteiles 35, durchqueren dort die zweiten Durchführungsöffnungen 10 und enden, beispielsweise distanziert vom Verankerungskörper 35 in einer festen Verankerung 43. Die Rigole 45 bzw. die Abstände der Schenkel und Abmessungen der eingesetzten Verankerungskörper 15 sind so bemessen, dass nach dem Betonieren zum Vorspannen der Spannglieder eine Spannpresse an die Spannverankerungen 42 angesetzt werden kann. Gegenüber früheren Ausführungen mit Verankerungsnischen, wo die Spannpresse ausserhalb der Nische angebracht werden musste und das Spannglied beispielsweise über einen Umlenkstuhl umgelenkt worden ist, wodurch beim Vorspannen grosse Reibungsverluste entstanden sind, können mit den Verankerungskörpern die Spannglieder einzeln praktisch ohne die obgenannten Reibungsverluste vorgespannt werden. Es können dadurch kleiner dimensionierte Spannpressen verwendet werden. Im weiteren ist aus der Fig. 6 ersichtlich, dass die Verankerungskörper so konstruiert werden können, dass die Spannglieder praktisch mit konstantem Radius verlegbar sind. Dies wirkt sich für die Kleinhaltung der Reibungsverluste ebenfalls positiv aus.

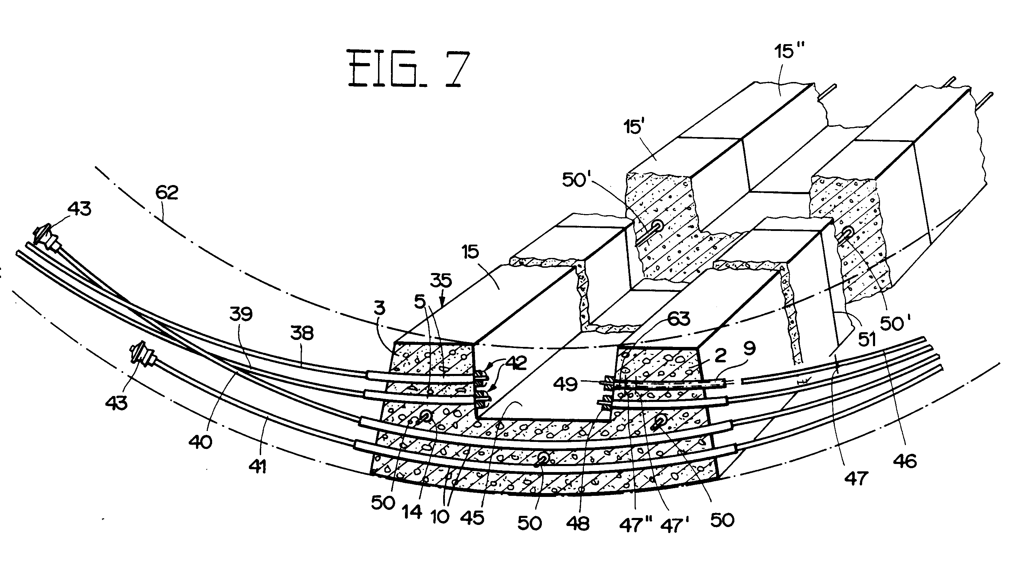

Die Fig. 7 zeigt in perspektivischer Darstellung hintereinandergereihte Verankerungskörper 15, 15' und 15'', die bei der Erstellung des Druckstollens als Sohlenteil 35 gedient haben. Mit 42 sind wiederum die Spannverankerungen und mit 43 die festen Verankerungen gekennzeichnet. Ebenfalls sind in der Figur die vorgängig beschriebenen Spannglieder 38, 39, 40, 41 sichtbar. Mit 46 ist ein weiteres Spannglied angedeutet, anhand dessen das Einführen in den Verankerungskörper 15 und das Vorspannen erklärt werden können. Vor dem Einführen des Spanngliedes 46, das in diesem Beispiel als Einzellitze mit einer Kunststoffummantelung dargestellt ist, in die erste Durchführungsöffnung 5 wird der Kunststoffmantel an einem Ort 47, der ausserhalb des Verankerungskörpers 15 liegt, eingeschnitten. Das Spannglied wird darauf in die ihm zugeordnete erste Durchführungsöffnung 5 des Verankerungskörpers 15 eingeführt und ragt auf der Innenseite des entsprechenden Schenkels vor. Der Einschnitt befindet sich jetzt beispielsweise am Ort 47' innerhalb des Metallrohres 9. Die vorderste Kunststoffummantelung wird entfernt und eine Ankerbüchse 48 wird über die freigelegte Litze 49 geschoben. Mit einer Spannpresse wird das Kabel vorgespannt und in der Spannbüchse verkeilt. Das Ende der Kunststoffummantelung befindet sich jetzt am Ort 47'' knapp vor der Ankerbüchse 48. Zum Erreichen eines in sich geschlossenen Korrosionsschutzes wird der noch verbleibende Hohlraum 63 zwischen der Ankerbüchse und der Kunststoffummantelung mit einer Injektionsmasse gefüllt. Nach dem Vorspannen der Spannglieder können die Rillen 45 zubetoniert und der Betonwandung 62 angepasst werden.

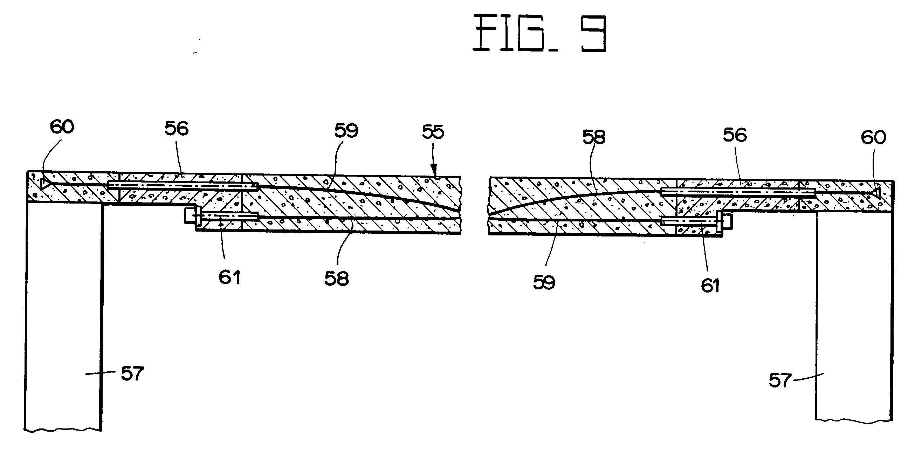

In der Fig. 7 sind ebenfalls Vorspannstangen 50, 50' sichtbar, mit denen mehrere hintereinander gereihte Verankerungskörper 15, 15', 15'', wie bereits dargelegt, beispielsweise während des Druckstollenausbruchs miteinander unter Vorspannung verbunden werden. Eine solche Verbundstelle von zwei Verankerungskörpern 15, 15' ist beispielsweise in der Fig. 8 näher gezeigt. Die Längsöffnung 14' vom Verankerungskörper 15' weist beispielsweise an ihrem einen Ende eine Erweiterung 52 auf, in welche eine Ankerplatte 53 kurz vor dem Anfügen des weiteren Verankerungskörpers 15 eingelegt wird oder bereits während der Herstellung der Verankerungskörper im Beton eingegossen ist. Die durch die Ankerplatte 53 durchgeführte Spannstange 50' ist in bekannter Art und Weise vorgespannt und beispielsweise mit der Ankerplatte 53 verkeilt worden. Das Ende der Spannstange 50' weist beispielsweise ein Gewinde auf, über das eine Stangenkopplungsmutter 54 geschraubt wird. Diese Mutter ist so bemessen, dass sie in die Längsöffnung 14 des nun anzufügenden Verankerungskörpers 15 hineinpasst. Nach dem Anordnen des Verankerungskörpers 15 wird eine weitere Spannstange 50 durch die Durchführungsöffnung 14 geschoben und in die Stangenkopplungsmutter 54 eingeschraubt, bis sie an der Stange 50' anliegt. Auf die zwischen zwei Verankerungskörpern 15, 15' vorhandenen Stossflächen wird vorzugsweise ein Klebemörtel aufgetragen. Darauf kann die weitere Stange 50 wie bereits beschrieben vorgespannt werden. Auf diese Weise werden die aus mehreren Verankerungskörpern gebildeten Verankerungsblöcke erstellt.

Der Vollständigkeit halber ist in der Fig. 9 noch die Anordnung von Verankerungskörpern gemäss der vorgängig beschriebenen Fig. 5 nach der Erstellung einer ebenen Platte oder Decke gezeigt. Beidseitig der Decke sind Verankerungskörper 56 angeordnet, die teilweise auf einer Tragkonstruktion 57 aufliegen können. Ein erstes Spannglied 58 weist an seinem in der Figur rechten Ende eine feste Verankerung 60 auf, ist durch den rechten Verankerungskörper 56 hindurchgeführt und endet in einer Spannverankerung 61 des linken Spanngliedes 56. Ein zweites Spannglied 59 endet auf seiner linken Seite in einer Festverankerung 60, ist durch den linken Verankerungskörper 56 hindurchgeführt und endet auf seiner rechten Seite in einer Spannverankerung 61 des rechten Verankerungskörpers 56. Die Decke 55 ist nach dem Betonieren ohne Schalung im fertigen Zustand gezeichnet. Der Uebersicht halber sind die weiteren notwendigen Armierungseisen nicht dargestellt.

In den vorangegangenen Ausführungsbeispielen ist immer von aus einer mit einem Kunststoffmantel versehenen und gefetteten Einzellitze ausgegangen worden. Durch entsprechende Dimensionierung der ersten und zweiten Durchführungsöffnungen und/oder Einschnitte ist es jedoch ebensogut möglich, wenn die Spannkraft dies erfordert, als Spannglieder mehrere zu einem Bündel zusammengefasste Einzellitzen zu verwenden. Selbstverständlich sind die festen Verankerungen und die Spannverankerungen dazu entsprechend auszubilden.

In analoger Weise zu den vorgängig geschilderten Ausführungsbeispielen können gewölbte Platten oder Wände durch den Einsatz von Verankerungskörpern in relativ einfacher und kostensparender Weise vorgespannt werden.

## Patentansprüche

1. Vorgespannte Betonauskleidung in einem Druckstollen, mit mehreren um den Umfang und längs des Druckstollens verteilten und mindestens teilweise aneinander anschliessenden Armierungselementen (32), mit Spanngliedern (38, 39, 40, 41), die mindestens einen Teil des Druckstollenumfanges umfassen, mit Spannverankerungen (42) zum Spannen der Spannglieder, wobei die Spannverankerungen wenigstens während dem Bau des Druckstollens vom Stolleninnern zugänglich sind, sowie mit einem sich längs des Druckstollens erstreckenden Sohlenteil (35), der aus mehreren aneinandergereihten Einzelelementen gebildet ist, deren Seitenflächen je von Armierungselementen benachbart sind, dadurch gekennzeichnet, dass jedes der Einzelelemente ein Verankerungskörper (1, 15, 19) ist, dass jeder der Verankerungskörper einen im wesentlichen U-förmigen Querschnitt aufweist, dass in jedem der dem Stolleninnern zugewandten Schenkel (2, 3) der Verankerungskörper erste Mittel (5, 20) zum Durchführen von mindestens je einem der Spannglieder (38, 39, 40, 41) vorhanden sind, wobei an den einander zugewandten Innenflächen der Schenkel im Bereich von jedem der ersten Durchführungsmittel (5, 20) eine Ankerplatte (8) angeordnet ist, dass im Basisschenkel zweite Mittel (10, 21) zum Durchführen von mindestens je einem der Spannglieder (38, 39, 40, 41) vorhanden sind und dass jedes der Spannglieder (38, 39, 40, 41), ausgehend von einem Festanker (43), durch eines der zweiten Durchführungsmittel (10, 21) eines der Verankerungskörper geführt ist und nach dem Durchqueren eines der ersten Durchführungsmittel (5, 20) von einem der Verankerungskörper in einer an einer der Ankerplatten (8) anliegenden Ankerbüchse (48) einer Spannverankerung (42) endet.

2. Betonauskleidung nach Anspruch 1, dadurch gekennzeichnet dass jeder der Verankerungskörper (1, 15, 19) in seiner Längsrichtung mindestens eine durchgehende Oeffnung (14) aufweist und dass die Verankerungskörper mit die genannten Oeffnungen durchdringenden Spannmittel (50) durch Vorspannung miteinander verbunden sind.

3. Betonauskleidung nach Anspruch 1 oder 2, dadurch gekennzeichnet, dass mit weiteren aneinandergereihten Verankerungskörpern (1, 15, 19) ein Verankerungsblock (36) gebildet ist, dass einer oder mehrere Verankerungsblöcke (36) um den Umfang des Druckstollens verteilt angeordnet sind, wobei in Umfangsrichtung des Druckstollens zwischen zwei benachbarten Verankerungsblöcken (36) und/oder dem Sohlenteil (35) und einem dazu benachbarten Verankerungsblock (36) mindestens eines der Armierungselemente (32) vorhanden ist.

4. Betonauskleidung nach einem der Ansprüche 1 bis 3, dadurch gekennzeichnet, dass die Spannglieder (38, 39, 40, 41) kunststoffummantelte Monolitzen, die mit einem bis in die ersten Durchführungsmittel (5, 20) reichenden durchgehenden Korrosionsschutz versehen sind, umfassen.

5. Betonauskleidung nach einem der Ansprüche 1 bis 3, dadurch gekennzeichnet, dass die Spannglieder (38, 39, 40, 41) mehrere in Hüllrohre verlegte Litzen umfassen.

6. Betonauskleidung nach einem der Ansprüche 1 bis 5, dadurch gekennzeichnet, dass die Verankerungskörper (1, 15, 19) aus armiertem Beton vorfabriziert und während dem Druckstollenbau in den Druckstollen einbringbar sind.

7. Betonauskleidung nach einem der Ansprüche 1 bis 6, dadurch gekennzeichnet, dass die ersten Durchführungsmittel (5) und/oder die zweiten Durchführungsmittel (10) der Verankerungskörper (1, 15, 19) mit je einem ersten (9) und/oder mit je einem zweiten Metallrohr (11) versehene Durchführungsöffnungen sind.

8. Betonauskleidung nach einem der Ansprüche 1 bis 6, dadurch gekennzeichnet, dass die ersten Durchführungsmittel (20) und/oder die zweiten Durchführungsmittel (21) der Verankerungskörper (1, 15, 19) mit je einem ersten (9) und/oder mit je einem zweiten Metallrohr (11) versehene Einschnitte sind.

9. Betonauskleidung nach Anspruch 7 oder 8, dadurch gekennzeichnet, dass mindestens ein Teil der ersten Metallrohre (9) auf der der Ankerplatte (8) abgewandten Seite zum Bilden eines Armierungsstosses für das benachbarte Armierungselement (32) aus dem Verankerungskörper (1, 15, 19) herausragend angeordnet ist.

10. Betonauskleidung nach Anspruch 7 oder 8, dadurch gekennzeichnet, dass mindestens ein Teil der zweiten Metallrohre (11) zum Bilden eines Armierungsstosses für das benachbarte Armierungselement (32) wenigstens auf einer Seite aus dem Verankerungskörper (1, 15, 19) herausragend angeordnet ist.

11. Betonauskleidung nach einem der Ansprüche 1 bis 10, dadurch gekennzeichnet, dass die ersten Durchführungsmittel (5, 20) und/oder die zweiten Durchführungsmittel (10, 21) bezogen auf die Längsrichtung jedes der Verankerungskörper (1, 15, 19) in etwa gleichmässigen Abständen angeordnet sind.

## Claims

1. A prestressed lining concrete in a pressure gallery, with several reinforcement elements (32) distributed around the circumference and along the pressure gallery and bordering at least partially on each other, with prestressing elements (38, 39, 40, 41), which encompass at least a part of the circumference of the pressure gallery, with stressing anchorages (42) to stress the prestressing elements, the stressing anchorages being accessible from the inside of the gallery at least during the construction of the pressure gallery, and with a bottom part (35) extending along the length of the pressure gallery, formed of several individual elements in series, whose side surfaces are each bordered by reinforcement elements, wherein each of the individual elements is an anchorage body (1, 15, 19,), wherein each of the anchorage bodies has an essentially U-shaped cross-section, wherein in each of the arms (2, 3) of the anchorage bodies turned towards the inside of the gallery there are first means (5, 20) for passing through at least one of each of the prestressing elements (38, 39, 40, 41), a bearing plate (8) being disposed on the facing inner surfaces of the arms in the region of each of the first pass-through means (5, 20), wherein in the base arm there are second means (10, 21) for passing through at least one each of the prestressing elements (38, 39, 40, 41) and wherein each of the prestressing elements (38, 39, 40, 41), starting from a dead end anchor (43), is fed thorugh one of the second pass-through means (10, 21) of one of the anchorage bodies and, after crossing through one of the first pass-through means (5, 20) of one of the anchorage bodies, ends in an anchor head (48) of a stressing anchorage (42) adjacent to one of the bearing plates (8).

2. A lining concrete according to claim 1, wherein each of the anchorage bodies (1, 15, 19) has at least one opening (14) running through in the lengthwise direction and wherein the anchorage bodies are connected to each other through prestressing with stressing means (50) running through the said openings.

3. A lining concrete according to claim 1 or 2, wherein an anchorage block (36) is formed with additional anchorage elements (1, 15, 19) in series, wherein one or several anchorage blocks (36) are disposed at intervals around the circumference of the pressure gallery, there being at least one reinforcement element (32) in the circumferential direction of the pressure gallery between two adjacent anchorage blocks (36) and/or the bottom part (35) and an anchorage block (36) adjacent thereto.

4. A lining concrete according to one of the claims 1 to 3, wherein the prestressing elements (38, 39, 40, 41) comprise plastic sheathed mono-strands provided with a full corrosion protection which extends into the first pass-through means (5, 20).

5. A lining concrete according to one of the claims 1 to 3, wherein the prestressing elements (38, 39, 40, 41) comprise several strands placed in jacket tubes.

6. A lining concrete according to one of the claims 1 to 5, wherein the anchorage bodies (1, 15, 19) are prefabricated from reinforced concrete and can be placed in the pressure gallery during construction of the pressure gallery.

7. A lining concrete according to one of the claims 1 to 6, wherein the first pass-through means (5) and/or the second pass-through means (10) of the anchorage bodies (1, 15, 19) are pass-through openings provided each with a first (9) and/or each with a second metal duct (11).

8. A lining concrete according to one of the claims 1 to 6, wherein the first pass-through means (20) and/or the second pass-through means (21) of the anchorage bodies (1, 15, 19) are recesses each provided with a first (9) and/or each with a second metal duct (11).

9. A lining concrete according to claim 7 or 8, wherein at least part of the first metal duct (9) on the side turned away from the bearing plate (8) is disposed projecting out of the anchorage body (1, 15, 19) to form a reinforcement block of the adjacent reinforcement element (32).

10. A lining concrete according to claim 7 or 8, wherein at least part of the second metal duct (11) is disposed projecting out of the anchorage body (1, 15, 19) at least on one side to form a reinforcement block of the adjacent reinforcement element (32)

11. A lining concrete according to one of the claims 1 to 10, wherein the first pass-through means (5, 20) and/or the second pass-through means (10, 21) are disposed at approximately regular intervals in relation to the lengthwise direction of each of the anchorage bodies (1, 15, 19).

## Revendications

1. Habillage de béton précontraint dans une galerie en pression, comportant plusieurs éléments d'armature (32) répartis sur la périphérie longitudinalement à la galerie en pression et reliés au minimum en partie entre eux par des éléments de tension (38, 39, 40, 41) qui englobent au minimum une partie de la périphérie de la galerie en pression avec des ancrages de tension (42) pour tendre les éléments de tension, les ancrages de tension étant au minimum accessibles pendant la construction de la galerie en pression à partir de l'intérieur de celle-ci, de même qu'avec une partie semelle (35) s'étendant le long de la galerie en pression, laquelle partie semelle est constituée par plusieurs éléments indépendants disposés en ordre contigu, dont les surfaces latérales sont respectivement voisines des éléments d'armature, caractérisé en ce que chacun des différents éléments est un corps d'ancrage (1, 15, 19), que chacun des corps d'ancrage présente une section essentiellement en U, que dans chacun des montants (2, 3) des corps d'ancrage regardant l'intérieur de la galerie existent les premiers moyens (5, 20) de passage d'au minimum respectivement un des éléments de tension (38, 39, 40, 41), une plaque d'ancrage (8) étant disposée sur les surfaces intérieures se regardant des montants dans le domaine de chacun des premiers moyens de passage (5, 20), qu'il existe dans le montant de base un second moyen (10, 21) pour le passage d'au minimum respectivement un des éléments de tension (38, 39, 40, 41) et que chacun des éléments de tension (38, 39, 40, 41) et qu'en partant d'un ancrage fixe (43), soit guidé par un des deux moyens de passage (10, 21) d'un des corps d'ancrage et aboutisse, après avoir traversé un des premiers moyens de passage (5, 20) d'un des corps d'ancrage dans une douille d'ancrage (48) d'un ancrage de tension (42) appuyant sur une des plaques d'ancrage (8).

2. Habillage en béton conforme à la revendication 1, caractérisé en ce que chacun des corps d'ancrage (1, 15, 19) présente dans sa direction longitudinale au minimum une ouverture traversante (14) et que les corps d'ancrage sont reliés entre eux par une précontrainte avec le moyen de tension (50) passant par les orifices mentionnés.

3. Habillage en béton conforme à la revendication 1 ou 2, caractérisé en ce qu'un bloc d'ancrage (36) est constitué par d'autres corps d'ancrage (1, 15, 19) disposés l'un contre l'autre, qu'un ou plusieurs blocs d'ancrage (36) sont disposés répartis sur la périphérie de la galerie en pression, au minimum un des éléments d'armature (32) existant sur la périphérie de la galerie en pression entre deux blocs d'ancrage (36) contigus et/ou la partie semelle (35) et un bloc d'ancrage (36) contigu à celle-ci.

4. Habillage en béton conforme à l'une des revendications 1 à 3, caractérisé en ce que les éléments de tension (38, 39, 40, 41) englobent des mono-torons gainés de matière plastique, pourvus d'une protection contre la corrosion continue parvenant jusque dans les premiers moyens de passage (5, 20).

5. Habillage en béton conforme à l'une des revendications 1 à 3, caractérisé en ce que les éléments de tension (38, 39, 40, 41) comprennent plusieurs torons placés dans des tubes de gainage.

6. Habillage en béton conforme à l'une des revendications 1 à 5, caractérisé en ce que les corps d'ancrage (1, 15, 19) sont fabriqués en béton armé et peuvent être posés dans les galeries sous pression pendant leur construction.

7. Habillage en béton conforme à l'une des revendications 1 à 6, caractérisé en ce que les premiers moyens de passage (5) et/ou les seconds moyens de passage (10) des corps d'ancrage (1, 15, 19) sont des orifices de passage pourvus respectivement d'un premier tube métallique (9) et/ou respectivement d'un second (11).

8. Habillage en béton conforme à l'une des revendications 1 à 6, caractérisé en ce que les premiers moyens de passage (20) et/ou les seconds moyens de passage (21) des corps d'ancrage (1, 15, 19) sont des découpes pourvues respectivement d'un premier tube métallique (9) et/ou d'un second (11).

9. Habillage en béton conforme à la revendication 7 ou 8, caractérisé en ce qu'au minimum une partie des premiers tubes métalliques (9) est disposée en saillie sur le côté regardant la plaque d'ancrage (8) pour constituer un joint d'armature pour l'élément d'armature (32) contigu provenant du corps d'ancrage (1, 15, 19).

10. Habillage en béton conforme à la revendication 7 ou 8, caractérisé en ce qu'au minimum une partie du deuxième tube métallique (11) est disposée en saillie pour constituer un joint d'armature pour l'élément d'armature contigu (32) au minimum sur un côté du corps d'armature (1, 15, 19).

11. Habillage en béton conforme à l'une des revendications 1 à 10, caractérisé en ce que les premiers moyens de passage (5, 20) et/ou les seconds moyens de passage (10, 21) sont disposés approximativement à intervalles réguliers par rapport à la direction longitudinale de chacun des corps d'ancrage (1, 15, 19).
